# EUROPÄISCHE PATENTANMELDUNG

(11) **EP 4 775 936 A1**
(43) Veröffentlichungstag der Anmeldung: **15.07.2026**
(21) Anmeldenummer: 25221698.1
(22) Anmeldetag: 09.12.2025
(51) Int. Cl.: G01F 23/284

(54) **RADARFRONTEND MIT EINEM LINSENSYSTEM**

(30) Priorität: 14.01.2025 DE 102025101005
(71) Anmelder: VEGA Grieshaber KG, 77709 Wolfach (DE)
(72) Erfinder: HOFERER, Christian, 77652 Offenburg (DE); HERRMANN, René, 77709 Oberwolfach (DE)
(74) Vertreter: Maiwald GmbH

(57) **Zusammenfassung**

Die Erfindung betrifft ein Radarfrontend (300), insbesondere mit einem Linsensystem (340), beispielsweise zum Bestimmen eines Füllstands (115) in einem Behälter (100). Das Radarfrontend (300) weist eine Sendeantenne (310) auf, die zum Senden von Hochfrequenzwellen (315) eingerichtet ist, und eine Vielzahl von Empfangsantennen (320), die zum Empfangen von reflektierten Hochfrequenzwellen (325) eingerichtet sind. Weiterhin weist das Radarfrontend (300) ein Linsensystem (340) auf, das zum Bündeln der gesendeten und/oder der empfangenen Hochfrequenzwellen (315, 325) eingerichtet ist.

## Beschreibung

### Bezugnahme auf Verwandte Anmeldungen

Die vorliegende Anmeldung beansprucht die Priorität der deutschen Patentanmeldung Nr. 10 2025 101 005.6, eingereicht am 14. Januar 2025, die in vollem Umfang durch Bezugnahme in das vorliegende Dokument aufgenommen wird.

### Technisches Gebiet

Die Erfindung betrifft ein Radarfrontend, insbesondere mit einem Linsensystem, beispielsweise zum Bestimmen eines Füllstands in einem Behälter. Weiterhin betrifft die Erfindung ein Radarsystem, eine Verwendung und ein Verfahren.

### Hintergrund

Eine Messung und/oder eine Bestimmung eines Füllstands in einem Behälter von Füllständen in Behältern kann berührungslos durchgeführt werden. Dazu kann Radartechnologie verwendet werden. Mehrere Komponenten von Geräten zur Bestimmung des Füllstands können mittlerweile auf einem einzigen integrierten Schaltkreis (Chip) enthalten sein. Um ein System mit einem derartigen Chip tatsächlich verwenden zu können - z.B. für eine Bestimmung des Füllstands -, müssen jedoch noch weitere Komponenten zu dem Chip hinzugefügt und auf die intendierte Verwendung angepasst werden. Es wäre daher wünschenswert, ein System oder ein Teilsystem zur Verfügung zu stellen, mittels dessen der Integrationsaufwand reduziert werden könnte.

### Zusammenfassung

Es ist Aufgabe der Erfindung, eine Vorrichtung zur Verfügung zu stellen, mittels deren ein zumindest teilweise integriertes System zum Bestimmen eines Füllstands gebildet werden kann. Diese Aufgabe wird durch den Gegenstand der unabhängigen Patentansprüche gelöst. Weiterbildungen der Erfindung ergeben sich aus den Unteransprüchen und der folgenden Beschreibung.

Ein Aspekt betrifft ein Radarfrontend zum Bestimmen eines Füllstands in einem Behälter. Das Radarfrontend weist mindestens eine Sendeantenne auf, die zum Senden von Hochfrequenzwellen eingerichtet ist, und eine Vielzahl von Empfangsantennen, die zum Empfangen von reflektierten Hochfrequenzwellen eingerichtet sind. Weiterhin weist das Radarfrontend ein Linsensystem auf, das zum Bündeln der gesendeten und/oder der empfangenen Hochfrequenzwellen eingerichtet ist.

Ein Radarfrontend ist geeignet und/oder dazu eingerichtet, Hochfrequenzwellen in einem sogenannten Radarband zu senden und/oder zu empfangen. Typische Frequenzbereiche von Radarwellen umfassen beispielsweise Frequenzbereiche von 1 bis 300 GHz, beispielsweise von 50 GHz bis 100 GHz, z.B. von 58 GHz bis 64 GHz. Das Radarfrontend kann zum Beispiel zum Bestimmen eines Füllstands in einem Behälter verwendet werden, alternativ oder zusätzlich zum Bestimmen eines Grenzstands und/oder einer Topologie eines Füllgutes. Zu diesem Zweck können Verfahren wie das Pulsradarverfahren, das FMCW-Verfahren (Frequency-Modulated-Continuous-Wave-Radar) und/oder weitere Verfahren eingesetzt werden. Das Medium oder Füllgut kann beispielsweise eine Flüssigkeit sein, einschließlich einer Emulsion oder Suspension, oder ein Schüttgut, insbesondere ein granuliertes oder pulverförmiges Schüttgut. Der Behälter kann z.B. ein Gefäß oder ein Messtank, Prozesstank, Lagertank oder ein Silo von beliebiger Form sein. Beispielsweise kann der Behälter ein Großpackmittel (Intermediate Bulk Container, IBC) sein. Der Behälter kann auch ein Gerinne, beispielsweise ein Bach- oder Flussbett, sein.

Sensoren, welche ein derartiges Radarfrontend aufweisen, können beispielsweise in der Prozess- und Fertigungsindustrie, in der Lagerung von Rohstoffen, in der Chemie- und Pharmaindustrie sowie in der Umwelttechnik Anwendung finden. In den letzten Jahren kann ein Trend zu immer kompakteren Sensoren und/oder Radarfrontends festgestellt werden. In vielen Fällen können mehrere Komponenten von Geräten zur Bestimmung des Füllstands auf einem einzigen integrierten Schaltkreis (Chip) enthalten sein. Um kostengünstig solche Radarsensoren herstellen zu können, können auch die Antennenelemente der Sende- und Empfangsantennen als Leiterplattendesign, oder auf dem Substrat des Chips realisiert sein. Mit fortschreitender Integration können elektronische Komponenten auf dem Chip enthalten und/oder integriert sein, z.B. ein Radarwellengenerator oder Oszillator, Teile einer Steuer- und Auswerteeinheit oder eine vollständige Steuer- und Auswerteeinheit, und/oder weitere Komponenten. Ein Chip mit einer Vielzahl von Komponenten, welche die Radartechnologie unterstützen wird häufig als Radar System on Chip (RSoC) bezeichnet. Insbesondere kann ein Chip eine Vielzahl von Antennen aufweisen. In einer Ausführungsform weist ein Chip eine Sendeantenne auf und eine Vielzahl von Empfangsantennen. Andere Ausführungsformen können nur jeweils eine Sendeantenne und eine Empfangsantenne aufweisen. Weitere Ausführungsformen können eine Vielzahl von Sendeantennen und eine Vielzahl von Empfangsantennen aufweisen.

Weiterhin weist das Radarfrontend ein Linsensystem auf, das zum Bündeln der gesendeten und/oder der empfangenen Hochfrequenzwellen eingerichtet ist. Ein derartiges Radarfrontend mit einem Linsensystem kann vorteilhafterweise den Integrationsaufwand deutlich reduzieren, insbesondere weil das Linsensystem auf das jeweilige Radarfrontend angepasst sein kann, so dass es "off the shelf" zur Bildung von Geräten zur Bestimmung des Füllstands verwendet werden kann. Darüber hinaus kann das Linsensystem zu einer besseren Fokussierung der Radarwelle beitragen und auf diese Weise die Effizienz der Messung verbessern und/oder den Energieverbrauch des Radarfrontends reduzieren. Ferner kann das Linsensystem vorteilhafterweise zum Schutz der integrierten Schaltung und der Sende- und Empfangsantennen vor mechanischen und/oder vor chemischen Einflüssen beitragen. Das Linsensystem kann beispielsweise direkt an die Antennen anschließen, oder es kann Abstand zu den Antennen aufweisen und also sogenannter Antennendom realisiert sein.

In einer Ausführungsform kann die Tx-Antenne (Sendeantenne) im Brennpunkt liegen. In einigen Ausführungsformen kann die Tx-Antenne von der Wölbung der Linse vollständig überbedeckt sein. Die Rx-Antennen (Empfangsantennen) können vollständig, nur teilweise oder gar nicht von der Linse und/oder von einer Vielzahl von Linsen bedeckt sein.

In einer Ausführungsform weist das Linsensystem eine einzige Linse auf, deren Brennpunkt in einer Mitte zwischen der Sendeantenne und der Vielzahl von Empfangsantennen angeordnet ist. Als Mitte kann z.B. der geometrische Schwerpunkt der Sendeantenne und der Vielzahl von Empfangsantennen gewählt werden. Der Brennpunkt des Linsensystems - bzw., in dieser Ausführungsform: der einzigen Linse - kann so gestaltet sein, dass "hinter" dem Linsensystem (d.h. zwischen Linse und Füllgut) die Radarwellen nahezu parallel ausgesandt werden. Dies ist auch ein Vorteil der hier beschriebenen Varianten des Radarfrontends. Dies ist möglich, weil das Radarfrontend für jeden Typ von Verwendung und/oder für jeden Frequenzbereich ein optimiertes Linsensystem umfassen kann.

In einer Ausführungsform weist das Linsensystem eine einzige Linse auf, die vor der Sendeantenne oder vor einer der Empfangsantennen angeordnet ist. Es befindet eine sich also nur eine der Sende- oder Empfangsantennen im Brennpunkt der Antennenlinse bzw. des Antennendoms. Die restlichen Antennen befinden sich folglich nicht im Brennpunkt der Linse und "schielen" daher.

In einer Ausführungsform weist das Linsensystem eine erste Linse auf, deren Brennpunkt in einer Mitte der Sendeantenne angeordnet ist, und es weist eine Vielzahl von zweiten Linsen auf, deren Brennpunkt jeweils in einer Mitte jeder der Vielzahl von Empfangsantennen angeordnet ist. In dieser Ausführungsform kann vorteilhafterweise jeder Antenne also eine eigene, für diese Antenne optimierte, Linse zugeordnet sein.

In einer Ausführungsform weist das Linsensystem eine erste Linse auf, deren Brennpunkt in einer Mitte der Sendeantenne angeordnet ist, und eine zweite Linse, deren Brennpunkt in einer Mitte der Vielzahl von Empfangsantennen angeordnet ist. Diese Ausführungsform kann ein Kompromiss zwischen sehr guten Radareigenschaften und einer einfachen Herstellung sein.

In einer Ausführungsform weist das Radarfrontend mindestens eine weitere Sendeantenne auf, wobei das Linsensystem eine dritte Linse aufweist, deren Brennpunkt in einer Mitte der Vielzahl von Sendeantennen angeordnet ist, und es weist eine zweite Linse auf, deren Brennpunkt in einer Mitte der Vielzahl von Empfangsantennen angeordnet ist.

In einigen Ausführungsformen ist die einzige Linse, die erste Linse, die zweite Linse bzw. die zweiten Linsen, und/oder die dritte Linse bikonvex oder plankonvex gestaltet. Insbesondere plankonvexe Linse fügen sich gut als Bestandteil eines Gehäuses für ein Füllstandmessgerät ein.

In einigen Ausführungsformen ist die einzige Linse, die erste Linse, die zweite Linse bzw. die zweiten Linsen, und/oder die dritte Linse als Fresnel-Linse gestaltet. Dies kann vorteilhafterweise zu einer besonders kompakten Ausführungsform des Radarfrontends und/oder des gesamten Systems führen.

In einigen Ausführungsformen sind die eine Sendeantenne oder die Vielzahl von Sendeantennen und/oder die Vielzahl von Empfangsantennen als planare Antenne gestaltet. Beispiele für planare Antennen umfassen z.B. Vivaldi-Antennen.

In einigen Ausführungsformen sind die Antennen als planare Leitungsstruktur gestaltet. Die planare Leitungsstruktur kann auf einer Platine (PCB), auf einem Substrat und/oder auf dem Chip angeordnet sein.

In einigen Ausführungsformen sind die Antennen als Teil eines Radar System on Chip, RSoC, gestaltet. Diese ermöglicht vorteilhafterweise eine besonders kompakte Gestaltung des Radarfrontends und/oder des gesamten Systems. Der RSoC kann z.B. auch noch einen Radarwellengenerator und/oder einen Verstärker umfassen

In einigen Ausführungsformen befindet sich zwischen den Antennen und dem Linsensystem ein Luftspalt. Derartige Radarfrontends können z.B. als Radarfrontends mit einem Linsendom bezeichnet werden. Der Luftspalt kann z.B. durch mechanische Ausgestaltung des Füllstandmessgeräts entstehen, und/oder der Luftspalt kann für bestimmte Ausführungsformen erforderlich sein, um die Linse auszurichten.

In einigen Ausführungsformen berühren sich die Antennen und das Linsensystem zumindest teilweise. Die Linse kann z.B. bündig auf dem Chip sitzt und/oder diesen zumindest stellenweise berühren.

In einigen Ausführungsformen ist das Radarfrontend zum Senden und/oder zum Empfangen von Hochfrequenzwellen in einem Frequenzbereich von 1 bis 300 GHz, beispielsweise von 50 GHz bis 100 GHz, z.B. von 58 GHz bis 64 GHz, eingerichtet.

Ein Aspekt betrifft ein Radarsystem zum Bestimmen eines Füllstands in einem Behälter. Das Radarsystem weist ein Radarfrontend auf, wie oben und/oder nachfolgend beschrieben. Weiterhin weist das Radarsystem einen Radarwellengenerator auf, der zum Erzeugen von Hochfrequenzwellen eingerichtet ist und der mit dem Radarfrontend verbunden ist, eine Steuer- und Auswerteeinheit, die zum Steuern des Radarfrontends und zum Auswerten der von den Empfangsantennen empfangenen Daten eingerichtet ist und die mit dem Radarfrontend und dem Radarwellengenerator verbunden ist, undein Kommunikationsmodul, das zum Weiterleiten der empfangenen Daten eingerichtet ist. Vor dem Weiterleiten der empfangenen Daten können die Daten noch verarbeitet werden, z.B. kann aus diesen Daten ein Füllstand (etc.) bestimmt werden. Darüber hinaus weist das Radarsystem ein Gehäuse auf, welches das Radarfrontend, den Radarwellengenerator, die Steuer- und Auswerteeinheit, und das Kommunikationsmodul umschließt. Dabei kann ein Teil des Radarfrontends, z.B. das Linsensystem, Teil des Gehäuses sein. Weiterhin kann ein Füllstandmessgerät beispielsweise ein Gehäuse, eine Antenne, eine Energieversorgung, eine Radarkomponente, eine Auswerteeinheit, eine Kommunikationsschnittstelle und/oder weitere Komponenten umfassen.

In einigen Ausführungsformen besteht die einzige Linse, die erste Linse, die zweite Linse bzw. die zweiten Linsen, und/oder die dritte Linse aus demselben Material wie das Gehäuse des Radarfrontends. Das Linsensystem bzw. die Linse kann dabei ein Bestandteil des Gehäuses sein. Die Linse kann dabei mittig - oder auch nicht-mittig - z.B. auf der Gehäuseunterseite angeordnet sein.

In einigen Ausführungsformen sind das Linsensystem und das Gehäuse des Radarfrontends einstückig gestaltet. Dabei können die Materialen für das Linsensystem und das Gehäuse gleich oder auch unterschiedlich sein. Als Materialien für das Linsensystem und/oder das Gehäuse kann z.B. Polytetrafluorethylen, PTFE, verwendet werden.

In einigen Ausführungsformen sind das Linsensystem und das Gehäuse mittels Spritzguss gefertigt. Dabei können die Materialen für das Linsensystem und das Gehäuse gleich oder auch unterschiedlich sein.

In einigen Ausführungsformen ist das Gehäuse hermetisch dicht gestaltet. Dabei können die Materialen für das Linsensystem und das Gehäuse gleich oder auch unterschiedlich sein. Das hermetisch dichte Gehäuse kann mittels Spritzguss gefertigt sein.

Ein Aspekt betrifft eine Verwendung eines Radarfrontends wie oben und/oder nachfolgend beschrieben oder eines Radarsystems wie oben und/oder nachfolgend beschrieben zum Bestimmen eines Füllstands, eines Grenzstands und/oder einer Topologie eines Füllgutes in einem Behälter.

Ein Aspekt betrifft ein Verfahren zum Bestimmen eines Füllstands, eines Grenzstands und/oder einer Topologie eines Füllgutes in einem Behälter, mittels eines Radarsystems wie oben und/oder nachfolgend beschrieben. Das Verfahren weist folgende Schritte auf:
Erzeugen, mittels eines Radarwellengenerators, von Hochfrequenzwellen;
Übertragen der Hochfrequenzwellen zu einem Radarfrontend wie oben und/oder nachfolgend beschrieben;
Senden, mittels einer oder mehreren Sendeantenne(n), der Hochfrequenzwellen;
Empfangen, mittels einer Vielzahl von Empfangsantennen, der von dem Füllgut reflektierten Hochfrequenzwellen;
Auswerten, mittels einer Steuer- und Auswerteeinheit, der von dem Füllgut reflektierten Hochfrequenzwellen; und
Weiterleiten, mittels eines Kommunikationsmoduls, der ausgewerteten Daten.

In einigen Ausführungsformen weist das Verfahren folgende weitere Schritte auf:
Senden, mittels der einen oder mehreren Sendeantenne(n), der Hochfrequenzwellen.
Empfangen, mittels der Vielzahl von Empfangsantennen, von reflektierten Hochfrequenzwellen; dabei müssen die Hochfrequenzwellen nicht notwendigerweise von dem Füllgut reflektiert werden, sondern dieser Schritt kann auch mit einem leeren Behälter durchgeführt werden.
Bestimmen der einen oder mehreren Empfangsantenne(n) mit einem höchsten Signal-Rausch-Abstand; und auswerten, mittels einer Steuer- und Auswerteeinheit, der reflektierten Hochfrequenzwellen nur von der oder den Empfangsantenne(n) mit einem höchsten Signal-Rausch-Abstand.

Die vorgeschlagene Anordnung aus Linse und Antennen kann z.B. bei rauen, schiefen und/oder bei sich bewegenden Oberflächen besonders vorteilhaft sein. So kann man bei einer beispielhaften Anordnung aus einer Sende- und mehreren Empfangsantennen, je nach Einfallswinkel der elektromagnetischen Welle auf die Linse, einen unterschiedlichen Signal-Rausch-Abstand in den einzelnen Empfangskanälen erhalten. Eine Auswerteeinheit kann daher vorsehen, nur das Empfangssignal mit dem größten Signal-Rausch-Abstand für die Bestimmung des Füllstands heranzuziehen. Eine weitere Ausgestaltung kann vorsehen, alle Empfangssignale aller Empfangsantenne auszuwerten, um z.B. mittels Mittelung, Korrelation und/oder einem Einsatz künstlicher Intelligenz den Füllstand zu bestimmen.

Diese Schritte ermöglichen vorteilhafterweise eine Nutzung von nur einigen der Antennen oder auch nur einer einzigen Empfangsantenne, nämlich der mit dem höchsten Signal-Rausch-Abstand. Ein Messen, welche der Empfangsantennen für eine bestimmte Messsituation den höchsten Signal-Rausch-Abstand aufweist, kann beispielsweise einmal, in regelmäßigen zeitlichen Abständen und/oder ereignisbasiert erfolgen, z.B. nach einer größeren Änderung des gemessenen Füllstands. Dies kann sowohl Energie sparen als auch die Verwendung von "off the shelf" Chips ermöglichen.

In einigen Ausführungsformen weist das Verfahren folgende weitere Schritte auf:
Senden, mittels der einen oder mehreren Sendeantenne(n), der Hochfrequenzwellen.
Empfangen, mittels der Vielzahl von Empfangsantennen, von reflektierten Hochfrequenzwellen; dabei müssen die Hochfrequenzwellen nicht notwendigerweise von dem Füllgut reflektiert werden, sondern dieser Schritt kann auch mit einem leeren Behälter durchgeführt werden.
Mitteln der reflektierten Hochfrequenzwellen von der Vielzahl von Empfangsantennen, zum Verbessern des Signal-Rausch-Abstands. Das Mitteln kann ein Bestimmen eines arithmetischen oder eines geometrischen Mittels der Signalamplituden umfassen.

Ein Aspekt betrifft ein Programmelement, welches, wenn es auf der Prozessoreinheit - z.B. auf einem Chip wie oben und/oder nachfolgend beschrieben - ausgeführt wird, die Prozessoreinheit anweist, das hier beschriebene Verfahren durchzuführen.

Ein Aspekt betrifft ein computerlesbares Medium, auf dem das hier beschriebene Programmelement gespeichert ist.

Es sei noch angemerkt, dass die verschiedenen oben und/oder nachfolgend beschriebenen Ausführungsformen miteinander kombiniert werden können, soweit dies technisch sinnvoll ist.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Kurze Beschreibung der Figuren

Dabei zeigen:
- **Fig. 1**: schematisch ein Radarsystem gemäß einer Ausführungsform;
- **Fig. 2**: schematisch ein Radarfrontend gemäß einer Ausführungsform;
- **Fig. 3a und 3b**: schematisch Radarfrontends gemäß einer Ausführungsform;
- **Fig. 4a - 4d**: schematisch Radarfrontends gemäß einer Ausführungsform;
- **Fig. 5**: ein Flussdiagramm mit einem Verfahren gemäß einer Ausführungsform.

### Detaillierte Beschreibung von Ausführungsformen

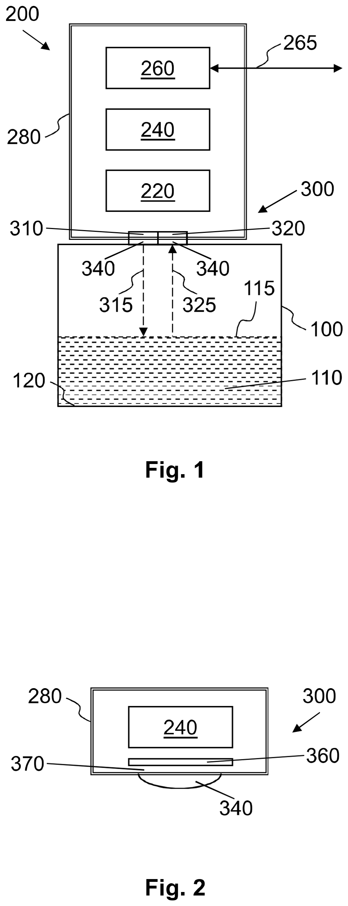

**Fig. 1** zeigt schematisch ein Radarsystem gemäß einer Ausführungsform. Das Radarsystem weist ein Radarfrontend 300 auf. Das Radarfrontend 300 weist eine Sendeantenne 310 auf, die zum Senden von Hochfrequenzwellen 315 eingerichtet ist, es weist eine Vielzahl von Empfangsantennen 320 auf, die zum Empfangen von reflektierten Hochfrequenzwellen 325 eingerichtet sind, und ein Linsensystem 340, das zum Bündeln der gesendeten und/oder der empfangenen Hochfrequenzwellen 315, 325 eingerichtet ist. Die Hochfrequenzwellen 315 werden von einem Radarwellengenerator 220 erzeugt und zu dem Radarfrontend 300, d.h. zu der Sendeantenne 310, übertragen. Die gesendeten Hochfrequenzwellen 315 werden dann, über ein Linsensystem 340, in Richtung eines Füllgutes 110 in den Behälter 100 gesandt. Die Hochfrequenzwellen werden anschließend von einer Oberfläche 115 des Füllgutes 110 reflektiert. Bei einem leeren Behälter 100 werden die gesendeten Hochfrequenzwellen von dem Boden 120 des Behälter 100 reflektiert. Die reflektierten Hochfrequenzwellen 325 werden, über das Linsensystem 340, von der Vielzahl von Empfangsantennen 320 empfangen. Eine Steuer- und Auswerteeinheit 240 dient zum Auswerten der von den Empfangsantennen 320 empfangenen Daten. Zum Weiterleiten der empfangenen Daten wird ein Kommunikationsmodul 260 verwendet. Das Kommunikationsmodul 260 kann drahtlose und/oder drahtgebundene Schnittstellen aufweisen. Das Radarsystem weist weiterhin ein Gehäuse 280 auf, welches das Radarfrontend 300, den Radarwellengenerator 220, die Steuer- und Auswerteeinheit 240, und das Kommunikationsmodul 260 umschließt.

**Fig. 2** zeigt schematisch ein Radarfrontend 300 gemäß einer Ausführungsform. Das Radarfrontend 300 ist von einem Gehäuse 280 umschlossen. Ein Linsensystem 340 kann Teil des Gehäuses 280 sein. Teile des Radarfrontends 300 - z.B. ein Radarwellengenerator 220 und Antennen 310, 320 (siehe **Fig. 1****)** können auf einem Chip 360 angeordnet sein. In dem dargestellten Ausführungsbeispiel befindet sich ein Luftspalt 370 zwischen dem Chip 360 und dem Linsensystem 340.

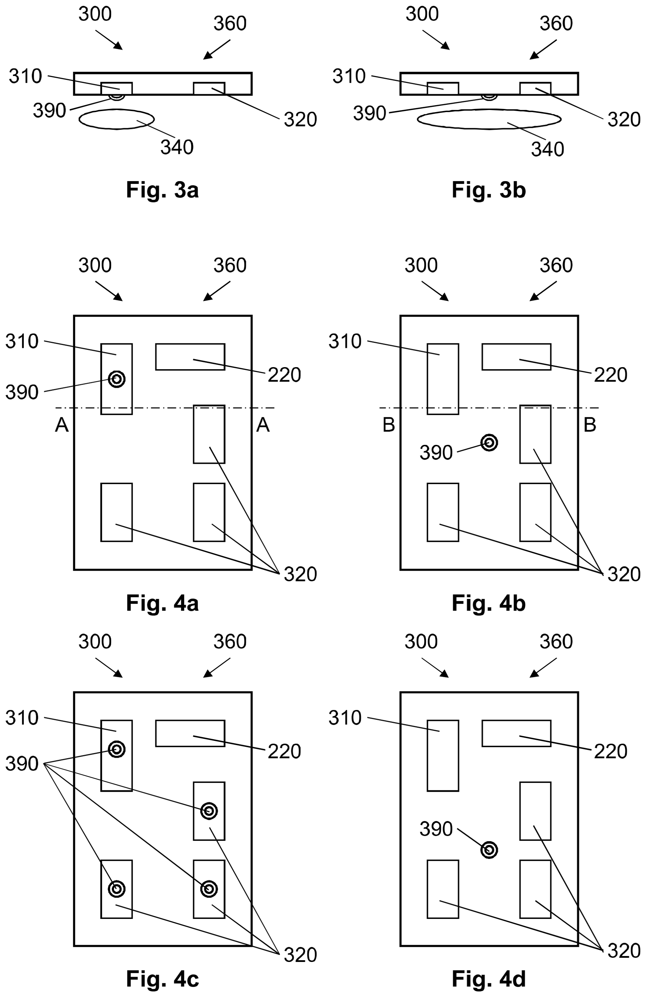

**Fig. 3a** und 3b zeigt schematisch Radarfrontends 300 gemäß einer Ausführungsform. Die Radarfrontends 300 weisen einen Chip 360 auf, der eine Sendeantenne 310 und eine Vielzahl von Empfangsantennen 320 umfasst. In **Fig. 3a** ist ein Linsensystem 340 - das in dem dargestellten Ausführungsbeispiel aus nur einer einzigen Linse besteht - vor der Sendeantenne 310 angeordnet. Dabei ist deutlich deren Brennpunkt 390 zu erkennen. Das Linsensystem 340 bündelt dabei eine kugelförmige Welle von der Sendeantenne 310 zu einer Welle mit einem deutlich schmäleren Öffnungswinkel. Der Öffnungswinkel der gebündelten Radarwelle kann beispielsweise in einem Bereich zwischen 5° und 15° liegen. In **Fig. 3b** ist das Linsensystem 340 - und deren Brennpunkt 390 - in einer Mitte zwischen der Sendeantenne 310 und der Vielzahl von Empfangsantennen 320 angeordnet. Die Linse oder das Linsensystem 340 von **Fig. 3b** kann deutlich größer sein als das Linsensystem 340 von **Fig. 3a****,** weil es zur Bündelung der Radarwellen von einer Vielzahl von Sendeantennen 310 eingerichtet ist.

**Fig. 4a** - **4d** zeigt schematisch Radarfrontends 300 gemäß einer Ausführungsform. Gleiche Bezugszeichen bezeichnen gleiche oder ähnliche Komponenten. In **Fig. 4a** ist ein Chip 360 dargestellt, der eine Sendeantenne 310 und eine Vielzahl von Empfangsantennen 320 umfasst. Weiterhin umfasst der Chip 360 einen Radarwellengenerator 220 auf. Die Darstellung von **Fig. 3a** entspricht einem Schnitt A-A durch **Fig. 4a****.** Zur besseren Erkennbarkeit ist in **Fig. 4a** nur der Brennpunkt 390 dargestellt, nicht aber das Linsensystem 340. In dem Ausführungsbeispiel von **Fig. 4a** befindet sich der Brennpunkt 390 der Linse in einem Zentrum der Sendeantenne 310. Die restlichen Antennen, d.h. die Empfangsantennen 320, befinden sich nicht im Brennpunkt der Linse und "schielen" daher.

**In** **Fig. 4b** ist ein Chip 360 wie in **Fig. 4a** dargestellt. Die Darstellung von **Fig. 3b** entspricht einem Schnitt B-B durch **Fig. 4b****.** Zur besseren Erkennbarkeit ist in **Fig. 4a** nur der Brennpunkt 390 dargestellt, nicht aber das Linsensystem 340. Das Ausführungsbeispiel von **Fig. 4b** weist eine einzige Linse auf, deren Brennpunkt 390 in einer Mitte zwischen der Sendeantenne 310 und der Vielzahl von Empfangsantennen 320 angeordnet ist. In **Fig. 4c** befindet sich vor jeder der Sendeantenne 310 und der Vielzahl von Empfangsantennen 320 eine Linse mit je einem Brennpunkt 390. Das Ausführungsbeispiel von **Fig. 4d** weist eine einzige Linse auf, deren Brennpunkt 390 in einer Mitte der Vielzahl von Empfangsantennen 320 angeordnet ist.

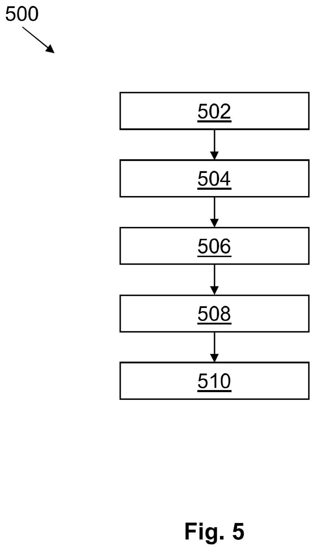

**Fig. 5** zeigt ein Flussdiagramm 500 mit einem Verfahren gemäß einer Ausführungsform. Das Verfahren kann zum Bestimmen eines Füllstands 115, eines Grenzstands und/oder einer Topologie eines Füllgutes in einem Behälter 100 (siehe **Fig. 1****)** dienen. Dazu kann ein Radarsystem wie oben beschrieben verwendet werden. In einem Schritt 502 werden, mittels eines Radarwellengenerators 220, Hochfrequenzwellen 315 erzeugt. In einem Schritt 504 werden die Hochfrequenzwellen 315 zu einem Radarfrontend 300 wie oben beschrieben übertragen. In einem Schritt 506 werden, mittels einer oder mehreren Sendeantennen 310, die Hochfrequenzwellen 315 gesendet. In einem Schritt 508 werden, mittels einer Steuer- und Auswerteeinheit 240, die von dem Füllgut reflektierten Hochfrequenzwellen 325 ausgewertet. In einem Schritt 510 werden, mittels eines Kommunikationsmoduls 260, die ausgewerteten Daten weitergeleitet.

### Liste der Bezugszeichen

- 100: Behälter
- 110: Füllgut
- 115: Oberfläche, Füllstands
- 120: Boden des Behälters
- 220: Radarwellengenerator
- 240: Steuer- und Auswerteeinheit
- 260: Kommunikationsmodul
- 280: Gehäuse
- 300: Radarfrontend
- 310: Sendeantenne
- 315: Hochfrequenzwellen
- 320: Empfangsantennen
- 325: reflektierte Hochfrequenzwellen
- 340: Linsensystem
- 360: Chip
- 370: Luftspalt
- 390: Brennpunkt
- 500: Flussdiagramm
- 502 - 510: Schritte

## Patentansprüche

1. Radarfrontend (300) zum Bestimmen eines Füllstands (115) in einem Behälter (100), das Radarfrontend (300) aufweisend:
eine Sendeantenne (310), eingerichtet zum Senden von Hochfrequenzwellen (315);
eine Vielzahl von Empfangsantennen (320), eingerichtet zum Empfangen von reflektierten Hochfrequenzwellen (325); und
ein Linsensystem (340), eingerichtet zum Bündeln der gesendeten und/oder der empfangenen Hochfrequenzwellen (315, 325).

2. Radarfrontend (300) nach Anspruch 1,
wobei das Linsensystem (340) eine einzige Linse aufweist, deren Brennpunkt in einer Mitte zwischen der Sendeantenne (310) und der Vielzahl von Empfangsantennen (320) angeordnet ist.

3. Radarfrontend (300) nach Anspruch 1,
wobei das Linsensystem (340) eine einzige Linse aufweist, die vor der Sendeantenne (310) oder vor einer der Empfangsantennen (320) angeordnet ist.

4. Radarfrontend (300) nach Anspruch 1,
wobei das Linsensystem (340) eine erste Linse aufweist, deren Brennpunkt in einer Mitte der Sendeantenne (310) angeordnet ist, und eine Vielzahl von zweiten Linsen aufweist, deren Brennpunkt jeweils in einer Mitte jeder der Vielzahl von Empfangsantennen (320) angeordnet ist.

5. Radarfrontend (300) nach Anspruch 1,
wobei das Linsensystem (340) eine erste Linse aufweist, deren Brennpunkt in einer Mitte der Sendeantenne (310) angeordnet ist, und eine zweite Linse aufweist, deren Brennpunkt in einer Mitte der Vielzahl von Empfangsantennen (320) angeordnet ist.

6. Radarfrontend (300) nach Anspruch 1, wobei das Radarfrontend (300) mindestens eine weitere Sendeantenne (310) aufweist,
wobei das Linsensystem (340) eine dritte Linse aufweist, deren Brennpunkt in einer Mitte der Vielzahl von Sendeantennen (310) angeordnet ist, und eine zweite Linse aufweist, deren Brennpunkt in einer Mitte der Vielzahl von Empfangsantennen (320) angeordnet ist.

7. Radarfrontend (300) nach einem der vorhergehenden Ansprüche,
wobei die einzige Linse, die erste Linse, die zweite Linse bzw. die zweiten Linsen, und/oder die dritte Linse bikonvex oder plankonvex oder als Fresnel-Linse gestaltet ist.

8. Radarfrontend (300) nach einem der vorhergehenden Ansprüche,
wobei die eine Sendeantenne (310) oder die Vielzahl von Sendeantennen (310) und/oder die Vielzahl von Empfangsantennen (320) als planare Antennen gestaltet sind.

9. Radarfrontend (300) nach einem der vorhergehenden Ansprüche,
wobei die Antennen (310, 320) als planare Leitungsstruktur gestaltet sind.

10. Radarfrontend (300) nach einem der vorhergehenden Ansprüche,
wobei die Antennen (310, 320) als Teil eines Radar System on Chip, RSoC (360), gestaltet sind.

11. Radarfrontend (300) nach einem der vorhergehenden Ansprüche,
wobei sich zwischen den Antennen (310, 320) und dem Linsensystem (340) ein Luftspalt (370) befindet.

12. Radarfrontend (300) nach einem der vorhergehenden Ansprüche,
wobei die Antennen (310, 320) und das Linsensystem (340) sich zumindest teilweise berühren.

13. Radarfrontend (300) nach einem der vorhergehenden Ansprüche,
wobei das Radarfrontend (300) zum Senden und/oder zum Empfangen von Hochfrequenzwellen (315, 325) in einem Frequenzbereich von 1 bis 300 GHz, beispielsweise von 50 GHz bis 100 GHz, z.B. von 58 GHz bis 64 GHz, eingerichtet ist.

14. Radarsystem zum Bestimmen eines Füllstands (115) in einem Behälter (100), das Radarsystem aufweisend:
ein Radarfrontend (300) nach einem der vorhergehenden Ansprüche;
ein Radarwellengenerator (220), der zum Erzeugen von Hochfrequenzwellen (315) eingerichtet ist und der mit dem Radarfrontend (300) verbunden ist;
eine Steuer- und Auswerteeinheit (240), die zum Steuern des Radarfrontends (300) und zum Auswerten der von den Empfangsantennen (320) empfangenen Daten eingerichtet ist und die mit dem Radarfrontend (300) und dem Radarwellengenerator (220) verbunden ist;
ein Kommunikationsmodul (260), das zum Weiterleiten der empfangenen Daten eingerichtet ist; und
ein Gehäuse (280), welches das Radarfrontend (300), den Radarwellengenerator (220), die Steuer- und Auswerteeinheit (240), und das Kommunikationsmodul (260) umschließt.

15. Radarsystem nach Anspruch 14,
wobei die einzige Linse, die erste Linse, die zweite Linse bzw. die zweiten Linsen, und/oder die dritte Linse aus demselben Material wie das Gehäuse (280) des Radarfrontends (300) besteht.

16. Radarsystem nach Anspruch 14 oder 15,
wobei das Linsensystem (340) und das Gehäuse (280) des Radarfrontends (300) einstückig gestaltet sind.

17. Radarsystem nach einem der Ansprüche 14 - 16,
wobei das Linsensystem (340) und das Gehäuse (280) mittels Spritzguss gefertigt sind.

18. Radarsystem nach einem der Ansprüche 14 - 17,
wobei das Gehäuse (280) hermetisch dicht gestaltet ist.

19. Verwendung eines Radarfrontends (300) nach einem der Ansprüche 1 - 13 oder eines Radarsystems nach einem der Ansprüche 14 - 18 zum Bestimmen eines Füllstands (115), eines Grenzstands und/oder einer Topologie eines Füllgutes in einem Behälter (100).

20. Verfahren zum Bestimmen eines Füllstands (115), eines Grenzstands und/oder einer Topologie eines Füllgutes in einem Behälter (100), mittels eines Radarsystems nach einem der Ansprüche 14 - 18, das Verfahren aufweisend die Schritte:
erzeugen, mittels eines Radarwellengenerators (220), von Hochfrequenzwellen (315);
übertragen der Hochfrequenzwellen (315) zu einem Radarfrontend (300) nach einem der Ansprüche 1 - 13;
senden, mittels einer oder mehreren Sendeantenne(n) (310), der Hochfrequenzwellen (315);
empfangen, mittels einer Vielzahl von Empfangsantennen (320), der von dem Füllgut reflektierten Hochfrequenzwellen (325);
auswerten, mittels einer Steuer- und Auswerteeinheit (240), der von dem Füllgut reflektierten Hochfrequenzwellen (325); und
weiterleiten, mittels eines Kommunikationsmoduls (260), der ausgewerteten Daten.

21. Verfahren nach Anspruch 20, mit den weiteren Schritten:
senden, mittels der einen oder mehreren Sendeantenne(n) (310), der Hochfrequenzwellen (315);
empfangen, mittels der Vielzahl von Empfangsantennen (320), von reflektierten Hochfrequenzwellen (325);
bestimmen der einen oder mehreren Empfangsantenne(n) mit einem höchsten Signal-Rausch-Abstand; und
auswerten, mittels einer Steuer- und Auswerteeinheit (240), der reflektierten Hochfrequenzwellen (325) nur von der oder den Empfangsantenne(n) mit einem höchsten Signal-Rausch-Abstand.

22. Verfahren nach Anspruch 20, mit den weiteren Schritten:
senden, mittels der einen oder mehreren Sendeantenne(n) (310), der Hochfrequenzwellen (315);
empfangen, mittels der Vielzahl von Empfangsantennen (320), von reflektierten Hochfrequenzwellen (325);
mitteln der reflektierten Hochfrequenzwellen (325) von der Vielzahl von Empfangsantennen (320), zum Verbessern des Signal-Rausch-Abstands.
